# EUROPÄISCHE PATENTSCHRIFT

(11) **EP 3 365 936 B1**
(45) Veröffentlichungstag und Bekanntmachung des Hinweises auf die Patenterteilung: **20.11.2019**
(21) Anmeldenummer: 16804735.5
(22) Anmeldetag: 25.11.2016
(51) Int. Cl.: H01M 8/0432, H01M 8/0444, G01N 25/00, H01M 8/1018, H01M 8/04044

(54) **VERFAHREN UND VORRICHTUNG ZUR ÜBERWACHUNG EINER FLÜSSIG GEKÜHLTEN BRENNSTOFFZELLENANLAGE**
METHOD AND DEVICE FOR CONTROLLING A LIQUID COOLED FUEL CELL SYSTEM
PROCÉDÉ ET APPAREIL POUR LE CONTRÔLE D'UN SYSTÈME DE PILE À COMBUSTIBLE REFRIGÉRÉ PAR UN CALOPORTEUR LIQUIDE

(30) Priorität: 04.12.2015 DE 102015015579
(43) Veröffentlichungstag der Anmeldung: 29.08.2018
(73) Patentinhaber: Siemens Aktiengesellschaft, 80333 München (DE)
(72) Erfinder: BRANDT, Torsten, 91301 Forchheim (DE); BRAUNECKER, Michael, 90491 Nürnberg (DE); HOFFMANN, Joachim, 90559 Burgthann (DE); MATTEJAT, Arno, 91056 Erlangen (DE)
(86) Internationale Anmeldenummer: PCT/EP2016/078763
(87) Internationale Veröffentlichungsnummer: WO 2017/093127

(56) Entgegenhaltungen:
- EP-A1- 2 579 374
- EP-A1- 2 700 940
- JP-A- 2005 135 711
- US-A1- 2005 008 914

## Beschreibung

Die Erfindung betrifft ein Verfahren und eine Vorrichtung zur Überwachung einer Brennstoffzellenanlage gemäß Oberbegriff des Patentanspruch 1 bzw. 6. Ein derartiges Verfahren bzw. eine derartige Vorrichtung sind beispielsweise aus der WO 2014/029675 A1 bekannt.

Im Betrieb einer Brennstoffzelle muss entstehende Verlustwärme aus dem aktiven Bereich der Brennstoffzelle weitgehend entfernt werden, um lokale Überhitzungen (sogenannte "hot spots") zu vermeiden. Dies erfolgt am effektivsten durch ein flüssiges Kühlmittel, das die Brennstoffzelle durchströmt.

In einem Brennstoffzellenstapel mit Brennstoffzellen basierend auf der Polymer-Elektrolyt-Membran (PEM)-Technologie befinden sich Elektroden an der einer Elektrolyt-Membran bzw. Katalysatorschicht abgewandten Seite im Kontakt mit jeweils einer so genannten Bipolarplatte oder Kühleinheit. Die Bipolarplatte hat die Aufgabe, die einzelnen Brennstoffzellen (medienseitig) zu trennen, für Stromfluss im Zellenstapel zu sorgen und die Reaktionswärme zu entfernen.

Neben der Stromleitung und der Führung der Reaktanten Wasserstoff und Sauerstoff, erfüllen die Bipolarplatten ihre Kühlfunktion, indem eine Kühlflüssigkeit, insbesondere Wasser, durch diese geleitet wird. Wegen seiner hohen spezifischen Wärmekapazität, der geringen elektrischen Leitfähigkeit, der guten Medienverträglichkeit und der niedrigen Betriebskosten kommt bei PEM-Brennstoffzellen hauptsächlich deionisiertes Wasser (Deionat) als Kühlflüssigkeit zum Einsatz. Die Kühlflüssigkeit darf nur eine sehr geringe Leitfähigkeit haben und sollte möglichst gasfrei sein, damit sich keine Gasblasen an der Oberfläche der Bipolarplatten festsetzen, da Bereiche mit Gasblasen schlechter gekühlt werden können und daher lokal überhitzt werden. Aufgrund physikalischer und konstruktiver Vorgaben ist jedoch nicht auszuschließen, dass auch ursprünglich gasfreie Kühlflüssigkeit bei ihrem Einsatz Gas aufnimmt und mit Blasen versehen ist.

Beispielsweise können durch geringe Leckagen in den Brennstoffzellen die Reaktanten Wasserstoff oder Sauerstoff in die Kühlflüssigkeit gelangen.

Außerdem sind in Brennstoffzellenanlagen, insbesondere bei einem Einsatz in außenluftunabhängigen Anwendungen wie z.B. an Bord von Unterwasserschiffen (z.B. U-Booten), die Brennstoffzellen oftmals von einem Schutzbehälter umgeben, der mit Stickstoff gefüllt ist, der einen größeren Druck als die Reaktanten in den Brennstoffzellen aufweist. Stickstoff wird auch zum Spülen der Gasräume der Brennstoffzellen, beispielsweise bei einem Abschalten der Brennstoffzellenanlage, verwendet. Somit kann durch geringe Leckagen auch Stickstoff in die Kühlflüssigkeit gelangen.

Aus der WO 2014/029675 A1 ist es bereits bekannt, den Gasgehalt in der Kühlflüssigkeit durch eine Messzelle zu überwachen, in die zumindest eine Teilmenge der Kühlflüssigkeit gefördert wird und in der dann ein Unterdruck eingestellt. Die Teilmenge wird dann mit einem wellenförmigen Messsignal bestrahlt und ein Trübungswert der Kühlflüssigkeit bestimmt, der dann mit einem Schwellwert verglichen wird. Des Weiteren zeigt die US 2005/008914 eine Brennstoffzellenanlage mit Kühlkreislauf, wobei im flüssigen Kühlmittel vorhandenes Gas in einem Tank abgeschieden wird, und wobei der Gehalt an Wasserstoff in dem abgeschiedenen Gas mittels eines H₂-Sensors gemessen und über eine Auswerteinheit beurteilt wird

Ausgehend hiervon ist es Aufgabe vorliegender Erfindung, ein Verfahren und eine Vorrichtung anzugeben, die mit geringem Apparateaufwand eine gute Überwachung des Gasgehalts der Kühlflüssigkeit und somit der Brennstoffzellenanlage ermöglichen.

Die Lösung der auf das Verfahren gerichteten Aufgabe gelingt durch ein Verfahren gemäß Patentanspruch 1 und die Lösung der auf die Vorrichtung gerichteten Aufgabe durch eine Vorrichtung gemäß Patentanspruch 6. Vorteilhafte Ausgestaltungen sind jeweils Gegenstand der Unteransprüche.

Gemäß der Erfindung kommt eine Messzelle zum Einsatz, die einen ersten Raum und einen zweiten Raum umfasst, die durch eine gasdurchlässige Membran voneinander getrennt sind, wobei die zumindest eine Teilmenge der Kühlflüssigkeit in den ersten Raum gefördert wird und wobei eine thermische Leitfähigkeit eines Gases oder Gasgemisches in dem zweiten Raum gemessen und in Abhängigkeit davon ein Wert für einen Gehalt der Betriebsgase in der Kühlflüssigkeit ermittelt wird.

Derartige Messzellen, manchmal auch als Thermo-Leitfähigkeits-Sensoren bezeichnet, sind an sich bekannt (siehe beispielsweise Thermo-Leitfähigkeitssensoren des Herstellers Dextens). Wie sich überraschenderweise herausgestellt hat, können sie aber besonders nutzbringend für die Überwachung der Kühlflüssigkeit von Brennstoffzellen genutzt werden, wenn Membrane zum Einsatz kommen, die gleichzeitig für zumindest zwei der drei Betriebsgase (d.h. Sauerstoff, Stickstoff, Wasserstoff), vorzugsweise für alle drei Betriebsgase, durchlässig sind. Dies kann beispielsweise der Fall sein, wenn die Membran aus einem Perfluoralkoxy-Polymer (PFA) besteht. Bei den zumindest zwei Betriebsgasen handelt es sich insbesondere um Sauerstoff und Stickstoff.

Weiterhin liegt hierbei die Erkenntnis zugrunde, dass auch alle drei Betriebsgase (vor allem Sauerstoff und Stickstoff) in etwa die gleiche thermische Wärmeleitfähigkeit besitzen. Somit kann mit einer einzigen Messzelle (d.h. einem einzigen Sensor) und somit geringem Apparateaufwand die Kühlflüssigkeit gleichzeitig auf zumindest zwei, vorzugsweise alle drei, Betriebsgase überwacht werden. Zwar können die jeweiligen Anteile der Betriebsgase in dem zweiten Raum und somit in der Kühlflüssigkeit nicht unterschieden werden, sondern im Ergebnis ist nur ein einziger "Summen"-Wert für den Gasgehalt der Betriebsgase erhältlich, aber dieser ist für die Überwachung des Gasgehalts in der Kühlflüssigkeit ausreichend.

Der Gasgehalt kann dabei aus einem gemessenen Absolutwert der thermischen Leitfähigkeit mit Hilfe von Zuordnungstabellen ermittelt werden. Vorzugsweise werden aber nur Änderungen der thermischen Leitfähigkeit gegenüber einem Referenzwert gemessen und daraus der Gasgehalt abgeleitet. Der Referenzwert kann wiederum durch eine thermische Leitfähigkeit eines Referenzgases definiert werden, dass sich in dem zweiten Raum der Messzelle befindet.

Von besonderem Vorteil ist hierbei, dass eine direkt quantifizierbare Messung der gelösten Gasanteile in der Kühlflüssigkeit möglich ist. In Abhängigkeit der quantifizierten Gasanteile in der Kühlflüssigkeit, des Drucks der Kühlflüssigkeit und der Austrittstemperatur der Kühlflüssigkeit aus den Brennstoffzellen kann dann ein betriebssicherer Zustand, d.h. ein hinsichtlich der Betriebsgase ausreichend untersättigter Zustand der Kühlflüssigkeit in den Brennstoffzellen, überwacht werden.

Wenn der ermittelte Gehalt der Betriebsgase in der Kühlflüssigkeit größer oder gleich einem Schwellwert ist, kann dann eine Sicherheitsreaktion der Brennstoffzellenanlage ausgelöst werden, beispielsweise die elektrische Leistung der Brennstoffzellenanlage reduziert oder die Brennstoffzellenanlage abgeschaltet werden.

Vorzugsweise wird der zweite Raum in an eine Dynamik der Kühlflüssigkeit (z.B. hinsichtlich Druck, Temperatur, Durchfluss) angepassten Zeitintervallen gespült und jeweils zumindest ein Wert für den Gehalt an den zumindest zwei Betriebsgasen ermittelt. Es hat sich dabei herausgestellt, dass ein guter Kompromiss bezüglich einfacher Spülregelung und trotzdem guter Genauigkeit der Überwachung dann erzielt werden kann, wenn die Zeitintervalle konstant sind und zwischen 15 und 45 Sekunden betragen. Dynamische Änderungen (einschließlich instationärer Zustände) können sich beispielsweise beim Hochfahren oder bei schnellen Lastwechseln der Brennstoffzelleanlage ergeben.

Als Spülgas kommt vorzugsweise Kohlendioxidgas CO2 zum Einsatz. In räumlich beengten Anwendungen wie z.B. an Bord von U-Booten kann als Spülgas auch Wasserstoff verwendet werden, da dieser ohnehin für den Betrieb der Brennstoffzellen vorhanden ist. Allerdings kann dann der Wasserstoffgehalt in dem zweiten Raum nicht berücksichtigt werden, was aber in der Praxis praktisch nicht von so großer Bedeutung ist, da erfahrungsgemäß der Gasgehalt vor allem durch den Sauerstoff und den Stickstoff geprägt wird.

Das Spülgas wird im Fall, dass wie vorstehend beschrieben der Gasgehalt anhand von Änderungen der thermischen Leitfähigkeit gegenüber einem Referenzwert ermittelt wird, dann vorzugsweise auch als Referenzgas benutzt. Insbesondere eignet sich dann CO2 als Spülgas bzw. Referenzgas, da die thermische Leitfähigkeit aller drei Betriebsgase größer als die von CO2 ist.

Um die Temperatur der Kühlflüssigkeit bei der Ermittlung des Gasgehalts der Kühlflüssigkeit zu berücksichtigen, wird von Vorteil die Temperatur der Kühlflüssigkeit in dem ersten Raum gemessen und daraus ein temperaturkompensierter Wert für den Gehalt der zumindest zwei Betriebsgase in der Kühlflüssigkeit ermittelt, wobei hierzu ein Temperatursensor und eine Analyseeinheit für die Ermittlung des Gasgehalts verwendet werden, die für eine Funktionsfähigkeit über einen gesamten Betriebstemperaturbereich der Brennstoffzellen ausgelegt sind.

Eine erfindungsgemäße Vorrichtung zur Überwachung einer Brennstoffzellenanlage, die mit gasförmigem Sauerstoff, Wasserstoff und Stickstoff als Betriebsgasen betreibbar ist, umfasst eine Messzelle zur Aufnahme zumindest einer Teilmenge einer Kühlflüssigkeit von Brennstoffzellen der Brennstoffzellenanlage, wobei die Messzelle einen ersten Raum und einen zweiten Raum umfasst, die durch eine gasdurchlässige Membran voneinander getrennt sind, die für zumindest zwei der drei Betriebsgase durchlässig ist, wobei der erste Raum zur Aufnahme der zumindest einen Teilmenge der Kühlflüssigkeit ausgebildet ist. Weiterhin umfasst die Vorrichtung:
- einen Wärmeleitfähigkeitssensor zur Messung einer thermischen Wärmeleitfähigkeit des Gases oder Gasgemisches in dem zweiten Raum, vorzugsweise gegenüber einem Referenzwert,
- eine Analyse- und Auswerteeinrichtung, die eingerichtet ist, einen Wert für einen Gehalt an den zumindest zwei Betriebsgasen in der Kühlflüssigkeit in Abhängigkeit von der thermischen Wärmeleitfähigkeit des Gases oder Gasgemisches in dem zweiten Raum zu ermitteln, den ermittelten Gehalt an den zumindest zwei Betriebsgasen in der Kühlflüssigkeit mit einem Schwellwert zu vergleichen und eine Sicherheitsreaktion der Brennstoffzellenanlage auszulösen, wenn der ermittelte Gehalt an den zumindest zwei Betriebsgasen in der Kühlflüssigkeit größer oder gleich dem Schwellwert ist und
den ermittelten Gehalt an den zumindest zwei Betriebsgasen in der Kühlflüssigkeit mit einem Schwellwert zu vergleichen und eine Sicherheitsreaktion der Brennstoffzellenanlage herbeizuführen, wenn der ermittelte Gehalt an den Betriebsgasen in der Kühlflüssigkeit größer oder gleich dem Schwellwert ist.

Bevorzugt umfasst die Vorrichtung eine Spüleinrichtung zur Spülung des zweiten Raumes mit einem Spülgas und die Analyse- und Asuwerteeinrichtung ist eingerichtet, in an eine Dynamik der Kühlflüssigkeit angepassten Zeitintervallen eine Spülung des zweiten Raumes durch die Spüleinrichtung auszulösen und in diesen Zeitintervallen (zeitversetzt zu den Spülungen) jeweils zumindest einen Wert für den Gehalt an den zumindest zwei Betriebsgasen zu ermitteln.

Gemäß einer vorteilhaften Ausgestaltung sind die Zeitintervalle konstant und betragen zwischen 15 und 45 Sekunden.

Gemäß einer weiteren vorteilhaften Ausgestaltung umfasst die Vorrichtung einen Temperatursensor zur Messung einer Temperatur der Kühlflüssigkeit in dem ersten Raum und eine Analyseeinheit ist eingerichtet, in Abhängigkeit dieser gemessenen Temperatur einen temperaturkompensierten Messwert für den Gasgehalt zu ermitteln.

Die für das erfindungsgemäße Verfahren und seine jeweiligen vorteilhaften Ausgestaltungen genannten Vorteile gelten entsprechend für die erfindungsgemäße Vorrichtung und deren jeweils korrespondierenden vorteilhaften Ausgestaltungen.

Gemäß einer weiteren vorteilhaften Ausgestaltung weist der erste Raum eine Eintrittsöffnung für eine Zufuhr von Kühlflüssigkeit in den ersten Raum und eine Austrittsöffnung für eine Abfuhr von Kühlflüssigkeit aus dem ersten Raum auf, wobei die Eintrittsöffnung mit einer Leitung für eine Zufuhr von Kühlflüssigkeit zu den Brennstoffzellen und die Austrittsöffnung mit einer Leitung für eine Abfuhr von Kühlflüssigkeit von den Brennstoffzellen verbunden ist. Es kann somit das Druckgefälle zwischen der Leitung für eine Zufuhr von Kühlflüssigkeit zu den Brennstoffzellen und der Leitung für eine Abfuhr von Kühlflüssigkeit von den Brennstoffzellen für die Förderung der Teilmenge der Kühlflüssigkeit in die Messzelle genutzt werden.

Alternativ kann der erste Raum in eine Leitung für eine Zufuhr von Kühlflüssigkeit zu den Brennstoffzellen oder eine Leitung für eine Abfuhr von Kühlflüssigkeit von den Brennstoffzellen integriert sein, beispielsweise durch einen nachträglichen Anbau der Messzelle an die jeweilige Leitung (z.B. durch ein Anflanschen).

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Dabei sind einander entsprechende Teile mit jeweils gleichen Bezugszeichen versehen. Es zeigen:
- FIG 1: eine Brennstoffzellenanlage mit einer erfindungsgemäßen Überwachungsvorrichtung in einer ersten Anbausituation und
- FIG 2: eine zweite Anbausituation für eine erfindungsgemäße Überwachungsvorrichtung.

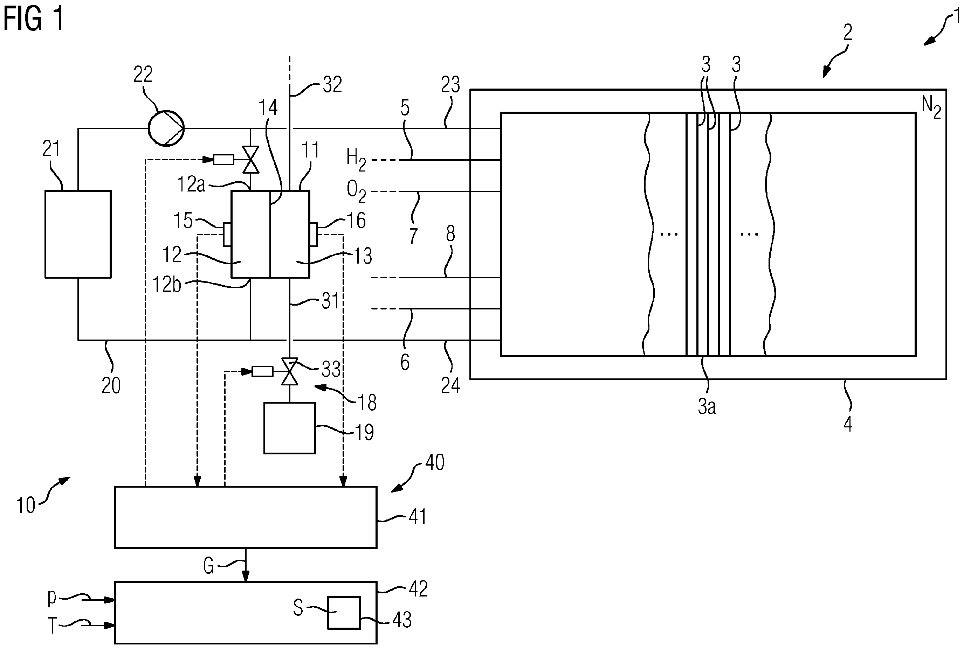

FIG 1 zeigt in vereinfachter Darstellung eine Brennstoffzellenanlage 1, die ein Brennstoffzellenmodul 2 umfasst, das einen Stapel 3a von Brennstoffzellen 3 aufweist, der von einem Schutzgehäuse 4 umgeben ist, das mit Stickstoff N2 als Schutzgas gefüllt ist. Die Brennstoffzellen 3 des Brennstoffzellenstapels 3a sind mit gasförmigem Sauerstoff O2 und Wasserstoff H2 als Reaktanten betreibbar. Eine Wasserstoffzufuhrleitung 5 dient zur Zufuhr von Wasserstoff H2 zu dem Brennstoffzellenstapel 3a und eine Wasserstoffabfuhrleitung 6 dient zur Abfuhr von (Rest-)Wasserstoff aus dem Brennstoffzellenstapel 3a. In entsprechender Weise dient eine Sauerstoffzufuhrleitung 7 zur Zufuhr von Sauerstoff O2 zu dem Brennstoffzellenstapel 3a und eine (Rest-) Sauerstoffabfuhrleitung 8 zur Abfuhr von Sauerstoff aus dem Brennstoffzellenstapel 3a.

Stickstoff N2 kann auch zum Spülen der Gasräume der Brennstoffzellen 3 zum Einsatz kommen, beispielsweise bei einem Abschalten der Brennstoffzellenanlage 1.

Der Brennstoffzellenstapel 3a wird über einen Kühlflüssigkeitskreislauf 20 gekühlt. Als Kühlflüssigkeit kommt vorzugsweise de-ionisiertes Wasser zum Einsatz. Der Kühlflüssigkeitskreislauf 20 umfasst beispielsweise einen Speicher 21 für die Kühlflüssigkeit, eine Förderpumpe 22 für die Kühlflüssigkeit, eine Zufuhrleitung 23 zur Zufuhr von Kühlflüssigkeit zu dem Brennstoffzellenstapel 3a und eine Abfuhrleitung 24 zur Abfuhr von Kühlflüssigkeit aus dem Brennstoffzellenstapel 3a.

Übergreifend gesehen wird die Brennstoffzellenanlage 1 somit mit den drei Betriebsgasen Wasserstoff H2, Sauerstoff O2 und Stickstoff N2 betrieben.

Somit können durch geringe Leckagen Wasserstoff, Sauerstoff und/oder Stickstoff in die Kühlflüssigkeit gelangen.

Eine Überwachungsvorrichtung 10 dient zur Überwachung des Gasgehalts der Kühlflüssigkeit und umfasst eine Messzelle 11 zur Aufnahme einer Teilmenge der Kühlflüssigkeit. Die Messzelle 11 umfasst einen ersten Raum 12 und einen zweiten Raum 13, die durch eine gasdurchlässige Polymer-Membran 14 voneinander getrennt sind. Der erste Raum 12 ist zur Aufnahme der Teilmenge der Kühlflüssigkeit ausgebildet und weist hierzu eine Eintrittsöffnung 12a für eine Zufuhr von Kühlflüssigkeit in den ersten Raum 12 und eine Austrittsöffnung 12b für eine Abfuhr von Kühlflüssigkeit aus dem ersten Raum 12 auf. Die Eintrittsöffnung 12a ist hierbei mit der 23 Leitung für die Zufuhr der Kühlflüssigkeit zu dem Brennstoffzellenstapel 3a und die Austrittsöffnung 12b ist mit der Leitung 24 für die Abfuhr der Kühlflüssigkeit von dem Brennstoffzellenstapel 3a verbunden. Durch ein Druckgefälle zwischen den Leitungen 23 und 24 wird Kühlflüssigkeit durch die Messzelle 11 gefördert.

Die Überwachungsvorrichtung 10 umfasst weiterhin einen Temperatursensor 15 zur Messung einer Temperatur der Kühlflüssigkeit in dem ersten Raum 12, einen Wärmeleitfähigkeitssensor 16 zur Messung einer thermischen Wärmeleitfähigkeit des Gases oder Gasgemisches in dem zweiten Raum 13 und eine Analyse- und Auswerteeinrichtung 40 mit einer Analyseeinheit 41 und einer Auswerteeinheit 42. Die Analyseeinheit 41 ist dafür eingerichtet, einen Wert für einen Gehalt G an zumindest zwei der drei Betriebsgase (insbesondere Sauerstoff und Stickstoff), vorzugsweise sämtlicher drei Betriebsgase, in der Kühlflüssigkeit in Abhängigkeit von der thermischen Wärmeleitfähigkeit des Gases oder Gasgemisches in dem zweiten Raum 13 zu ermitteln.

Die Polymer-Membran 14 besteht hierzu aus einem Perfluoralkoxy-Polymer (PFA), das für zumindest zwei, vorzugsweise alle drei Betriebsgase, durchlässig ist.

Während des Betriebs der Brennstoffzellenanlage 1 wird kontinuierlich Kühlflüssigkeit durch den ersten Raum 12 der Messzelle 11 gefördert. Ein Teil etwaig in der Kühlflüssigkeit vorhandener Betriebsgase gelangt über die Membran 14 in den zweiten Raum 13 der Messzelle 1. Dort wird durch den Wärmeleitfähigkeitssensor 16 die thermischen Wärmeleitfähigkeit des Gases oder Gasgemisches in dem zweiten Raum 13 gemessen und ein zugehörige Messwert von der Analyseeinheit 41 erfasst. Anhand in der Analyseeinheit 41 hinterlegter Kennlinien kann dann in Abhängigkeit von der ermittelten thermischen Wärmeleitfähigkeit des Gases oder Gasgemisches ein Wert für den Gehalt G an den zumindest zwei, vorzugsweise drei, Betriebsgasen in der Kühlflüssigkeit ermittelt werden. Da alle drei Betriebsgase in etwa die gleiche thermische Wärmeleitfähigkeit besitzen, kann somit alleine mit der Messzelle 11 und somit geringem Apparateaufwand die Kühlflüssigkeit gleichzeitig auf alle zumindest zwei, vorzugsweise alle drei, Betriebsgase überwacht werden. Der Gasgehalt kann auch anhand von Änderungen der thermischen Wärmeleitfähigkeit im Vergleich zu der thermischen Wärmeleitfähigkeit eines Referenzgases, vorzugsweise CO2, das sich in dem zweiten Raum 13 befindet, ermittelt werden

Um die Temperatur der Kühlflüssigkeit bei der Ermittlung des Gasgehalts der Kühlflüssigkeit zu berücksichtigen, wird durch den Temperatursensor 15 die Temperatur der Kühlflüssigkeit in dem ersten Raum 12 gemessen, der Messwert von der Analyseeinheit 41 erfasst und von dieser daraus ein temperaturkompensierter Wert für den Gehalt der Betriebsgase in der Kühlflüssigkeit ermittelt. Der Temperatursensor 15 und die Analyseeinheit 41 sind für eine Funktionsfähigkeit über einen gesamten Betriebstemperaturbereich der Brennstoffzellen 3 (z.B. über 70°C im Fall von PEM-Brennstoffzellen) ausgelegt.

Die Analyseeinheit 41 übergibt den ermittelten Gasgehalt G dann an die Auswerteeinheit 42, die dann in Abhängigkeit des ermittelten Gasgehalts G in der Kühlflüssigkeit, des Drucks p der Kühlflüssigkeit und der Austrittstemperatur T der Kühlflüssigkeit aus dem Brennstoffzellenmodul 2 einen betriebssicheren Zustand, d.h. einen hinsichtlich der Betriebsgase ausreichend untersättigten Zustand der Kühlflüssigkeit in den Brennstoffzellen, überwacht. Die Überwachungsvorrichtung 10 kann hierzu nicht näher dargestellte Sensoren zur Messung des Drucks p und der Austrittstemperatur T der Kühlflüssigkeit aus dem Brennstoffzellenmodul 2 umfassen, die mit der Auswerteeinheit 42 verbunden sind. In der Auswerteeinheit 42 kann dann in Abhängigkeit dieser Messwerte, beispielsweise anhand von Kennlinien, ein Schwellwert S für den Gasgehalt in der Kühlflüssigkeit ermittelt werden, bei dem gerade noch ein hinsichtlich der Betriebsgase ausreichend untersättigten Zustand der Kühlflüssigkeit in den Brennstoffzellen gegeben ist. Der Schwellwert S kann auch in einem Speicher 43 der Auswerteeinheit 42 abgespeichert sein oder abgespeichert werden.

Wenn der ermittelte Gehalt G der Betriebsgase in der Kühlflüssigkeit größer oder gleich diesem Schwellwert S ist, kann dann von der Auswerteeinheit 42 eine Sicherheitsreaktion der Brennstoffzellenanlage 1 ausgelöst werden, beispielsweise die elektrische Leistung der Brennstoffzellenanlage 1 reduziert oder die Brennstoffzellenanlage 1 abgeschaltet werden.

Die Überwachungsvorrichtung 10 umfasst weiterhin eine Spüleinrichtung 18 zur Spülung des zweiten Raumes 13 mit einem Spülgas und die Analyseeinheit 41 ist eingerichtet, in an eine Dynamik der Kühlflüssigkeit angepassten Zeitintervallen eine Spülung des zweiten Raumes 13 durch die Spüleinrichtung 18 auszulösen und in diesen Zeitintervallen (zeitversetzt zu den Spülungen) jeweils zumindest einen Wert für den Gehalt an den Betriebsgasen zu ermitteln. Die Spüleinrichtung 18 umfasst einen Speicher 19 für das Spülgas, eine Zufuhrleitung 31 für eine Zufuhr des Spülgases zu dem zweiten Raum 13 und eine Abfuhrleitung 32 für eine Abfuhr des Spülgases von dem zweiten Raum 13. Die Analyseeinheit 41 steuert über ein in der Leitung 31 angeordnetes Ventil 33 die Zeitdauer der Zufuhr an Spülgas zu dem zweiten Raum 13 und somit die Spülvorgänge.

Im Betrieb wird der zweite Raum 13 dann in an eine Dynamik der Kühlflüssigkeit (z.B. hinsichtlich Druck, Temperatur, Durchfluss) angepassten Zeitintervallen gespült und jeweils zumindest ein Wert für den Gehalt G an den Betriebsgasen ermittelt.

Es hat sich dabei herausgestellt, dass ein guter Kompromiss bezüglich einfacher Spülregelung und trotzdem guter Genauigkeit der Überwachung dann erzielt werden kann, wenn die Zeitintervalle konstant sind und zwischen 15 und 45 Sekunden betragen. Dynamische Änderungen (einschließlich instationärer Zustände) können sich beispielsweise beim Hochfahren oder bei schnellen Lastwechseln der Brennstoffzelleanlage ergeben.

Das Spülgas wird im Fall, dass wie vorstehend beschrieben der Gasgehalt anhand von Änderungen der thermischen Leitfähigkeit gegenüber einem Referenzwert ermittelt wird, dann vorzugsweise auch als Referenzgas benutzt. Insbesondere eignet sich dann CO2 als Spülgas bzw. Referenzgas, da die thermische Leitfähigkeit aller drei Betriebsgase größer als die von CO2 ist.

In räumlich beengten Anwendungen wie z.B. an Bord von U-Booten kann als Spülgas auch Wasserstoff verwendet werden, da dieser ohnehin für den Betrieb der Brennstoffzellen vorhanden ist. Allerdings kann dann der Wasserstoffgehalt in dem zweiten Raum 13 nicht berücksichtigt werden, was aber in der Praxis praktisch nicht von so großer Bedeutung ist, da erfahrungsgemäß der Gasgehalt G vor allem durch den Sauerstoff und den Stickstoff geprägt wird.

Die Analyseeinheit 41 kann sich in unmittelbarer Nähe der Messzelle 11 befinden oder in die Messzelle 11 integriert sein und die Auswerteeinheit 42 räumlich beanstandet von der Messzelle 11 angeordnet sein.

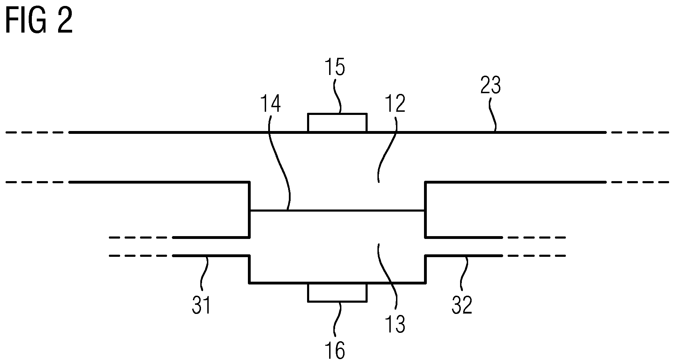

Bei einer in FIG 2 gezeigten zweiten Anbausituation für eine erfindungsgemäße Überwachungsvorrichtung 10 ist der erste Raum 12 direkt in eine Unterseite der Leitung 23 für die Zufuhr von Kühlflüssigkeit zu dem Brennstoffzellenmodul 2 integriert. Diese Anbausituation eignet sich vor allem für Nachrüstungen. Beispielsweise kann die Messzelle 11 auf einfache Weise an die Leitung 23 angeflanscht werden. Durch die Anordnung des ersten Raumes 12 an der Unterseite der Leitung 23 ist sichergestellt, dass sich kein Gas in dem ersten Raum 12 sammeln und die Messergebnisse verfälschen kann. Alternativ zu der in FIG 2 dargestellten Anbausituation kann der erste Raum 12 auch in die Leitung 24 für die Abfuhr von Kühlflüssigkeit von dem Brennstoffzellenmodul 2 integriert sein.

## Patentansprüche

1. Verfahren zur Überwachung einer Brennstoffzellenanlage (1), die mit gasförmigem Sauerstoff, Wasserstoff und Stickstoff als Betriebsgasen betrieben wird, wobei zumindest eine Teilmenge einer Kühlflüssigkeit von Brennstoffzellen (3) der Brennstoffzellenanlage (1) in eine Messzelle (11) gefördert wird, **dadurch gekennzeichnet, dass** die Messzelle (11) einen ersten Raum (12) und einen zweiten Raum (12) umfasst, die durch eine Membran (14) voneinander getrennt sind, die für zumindest zwei der drei Betriebsgase durchlässig ist, wobei die zumindest eine Teilmenge der Kühlflüssigkeit in den ersten Raum (12) gefördert wird und wobei eine thermische Leitfähigkeit eines Gases oder Gasgemisches in dem zweiten Raum (13), vorzugsweise gegenüber einem Referenzwert, gemessen und in Abhängigkeit davon ein Wert für einen Gehalt (G) der zumindest zwei Betriebsgase in der Kühlflüssigkeit ermittelt wird, und dass eine Sicherheitsreaktion der Brennstoffzellenanlage (1) ausgelöst wird, wenn der ermittelte Gehalt (G) der zumindest zwei Betriebsgase in der Kühlflüssigkeit größer oder gleich einem Schwellwert (S) ist.

2. Verfahren nach Anspruch 1, **dadurch gekennzeichnet dass** der zweite Raum (13) in an eine Dynamik der Kühlflüssigkeit angepassten Zeitintervallen gespült und in diesen Zeitintervallen jeweils zumindest ein Wert für den Gehalt (G) an den zumindest zwei Betriebsgasen ermittelt wird.

3. Verfahren nach Anspruch 2, **dadurch gekennzeichnet, dass** die Zeitintervalle konstant sind und zwischen 15 und 45 Sekunden betragen.

4. Verfahren nach einem der vorhergehenden Ansprüche, **dadurch gekennzeichnet, dass** eine Temperatur der Kühlflüssigkeit in dem ersten Raum (12) gemessen und daraus ein temperaturkompensierter Messwert für den Gehalt (G) der zumindest zwei Betriebsgase in der Kühlflüssigkeit ermittelt wird, wobei hierzu ein Temperatursensor (15) und eine Analyseeinheit (41) für die Ermittlung des Gasgehalts (G) verwendet werden, die für eine Funktionsfähigkeit über einen gesamten Betriebstemperaturbereich der Brennstoffzellen (3) ausgelegt sind.

5. Verfahren nach einem der vorhergehenden Ansprüche, **dadurch gekennzeichnet, dass** die Membran (14) für alle drei Betriebsgase durchlässig ist und dass ein Wert für einen Gehalt (G) aller drei Betriebsgase in der Kühlflüssigkeit ermittelt wird.

6. Vorrichtung (10) zur Überwachung einer Brennstoffzellenanlage (1), die mit gasförmigem Sauerstoff, Wasserstoff und Stickstoff als Betriebsgasen betreibbar ist, mit einer Messzelle (11) zur Aufnahme zumindest einer Teilmenge einer Kühlflüssigkeit von Brennstoffzellen (3) der Brennstoffzellenanlage (1), **dadurch gekennzeichnet, dass** die Messzelle (11) einen ersten Raum (12) und einen zweiten Raum (13) umfasst, die durch eine gasdurchlässige Membran (14) voneinander getrennt sind, die für zumindest zwei der drei Betriebsgase durchlässig ist, wobei der erste Raum (12) zur Aufnahme der zumindest einen Teilmenge der Kühlflüssigkeit ausgebildet ist,
und wobei die Vorrichtung (10) weiterhin umfasst:
- einen Wärmeleitfähigkeitssensor (16) zur Messung einer thermischen Wärmeleitfähigkeit eines Gases oder Gasgemisches in dem zweiten Raum (13), vorzugsweise gegenüber einem Referenzwert,
- eine Analyse- und Auswerteeinrichtung (40), die eingerichtet ist, einen Wert für einen Gehalt an zumindest zwei der Betriebsgase in der Kühlflüssigkeit in Abhängigkeit von der thermischen Wärmeleitfähigkeit des Gases oder Gasgemisches in dem zweiten Raum (13) zu ermitteln, den ermittelten Gehalt an den zumindest zwei Betriebsgasen in der Kühlflüssigkeit mit einem Schwellwert (S) zu vergleichen und eine Sicherheitsreaktion der Brennstoffzellenanlage (1) auszulösen, wenn der ermittelte Gehalt (G) an den zumindest zwei Betriebsgasen in der Kühlflüssigkeit größer oder gleich dem Schwellwert (S) ist.

7. Vorrichtung (10) nach Anspruch 6, **dadurch gekennzeichnet, dass** sie eine Spüleinrichtung (18) zur Spülung des zweiten Raumes (13) mit einem Spülgas umfasst und dass die Analyse- und Auswerteeinrichtung (40) eingerichtet ist, in an eine Dynamik der Kühlflüssigkeit angepassten Zeitintervallen eine Spülung des zweiten Raumes durch die Spüleinrichtung (18) auszulösen und in diesen Zeitintervallen jeweils zumindest einen Wert für den Gehalt an den zumindest zwei Betriebsgasen zu ermitteln.

8. Vorrichtung (10) nach Anspruch 7, **dadurch gekennzeichnet, dass** die Zeitintervalle konstant sind und zwischen 15 und 45 Sekunden betragen.

9. Vorrichtung (10) nach einem der Ansprüche 6 bis 8, **dadurch gekennzeichnet, dass** sie einen Temperatursensor (15) zur Messung einer Temperatur der Kühlflüssigkeit in dem ersten Raum (12) umfasst und dass eine Analyseeinheit (41) eingerichtet ist, in Abhängigkeit dieser gemessenen Temperatur einen temperaturkompensierten Messwert für den Gasgehalt zu ermitteln, wobei der Temperatursensor (15) und die Analyseeinheit (41) für eine Funktionsfähigkeit über einen gesamten Betriebstemperaturbereich der Brennstoffzellen (3) ausgelegt sind.

10. Verfahren nach einem der vorhergehenden Ansprüche, **dadurch gekennzeichnet, dass** die Membran (14) für alle drei Betriebsgase durchlässig ist und dass die Analyse- und Auswerteeinrichtung (40) eingerichtet ist, einen Wert für einen Gehalt (G) aller drei Betriebsgase in der Kühlflüssigkeit zu ermitteln.

11. Vorrichtung (10) nach einem der Ansprüche 6 bis 10, **dadurch gekennzeichnet, dass** der erste Raum (12) eine Eintrittsöffnung (12a) für eine Zufuhr von Kühlflüssigkeit in den ersten Raum (12) und eine Austrittsöffnung (12b) für eine Abfuhr von Kühlflüssigkeit aus dem ersten Raum (12) aufweist, wobei die Eintrittsöffnung (12a) mit einer Leitung (23) für eine Zufuhr von Kühlflüssigkeit zu den Brennstoffzellen (3) und die Austrittsöffnung (12b) mit einer Leitung (24) für eine Abfuhr von Kühlflüssigeit von den Brennstoffzellen (3) verbunden ist.

12. Vorrichtung (10) nach einem der Ansprüche 6 bis 10, **dadurch gekennzeichnet, dass** der erste Raum (12) in eine Leitung (23) für eine Zufuhr von Kühlflüssigkeit zu den Brennstoffzellen (3) oder in eine Leitung (24) für eine Abfuhr von Kühlflüssigkeit von den Brennstoffzellen (3) integriert ist.

## Claims

1. Method for monitoring a fuel cell system (1), which is operated with gaseous oxygen, hydrogen and nitrogen as operating gases, wherein at least one subset of a cooling liquid of fuel cells (3) of the fuel cell system (1) is conveyed into a measuring cell (11), **characterised in that** the measuring cell (11) comprises a first chamber (12) and a second chamber (12), which are separated from one another by means of a membrane (14), which is permeable for at least two of the three operating gases, wherein the at least one subset of the cooling liquid is conveyed into the first chamber (12), and wherein a thermal conductivity of a gas or gas mixture in the second chamber (13), preferably relative to a reference value, is measured and a value for a content (G) of the at least two operating gases in the cooling liquid is determined as a function thereof, and that a safety reaction of the fuel cell system (1) is triggered if the determined content (G) of the at least two operating gases in the cooling liquid is greater than or equal to a threshold value (S).

2. Method according to claim 1, **characterised in that** the second chamber (13) is flushed at time intervals adjusted to a dynamic of the cooling liquid and in each case at least one value for the content (G) of the at least two operating gases is determined at these time intervals.

3. Method according to claim 2, **characterised in that** the time intervals are constant and amount to between 15 and 45 seconds.

4. Method according to one of the preceding claims, **characterised in that** a temperature of the cooling liquid is measured in the first chamber (12) and a temperature-compensated measured value for the content (G) of the at least two operating gases in the cooling liquid is determined therefrom, wherein to this end a temperature sensor (15) and an analysis unit (41) is used for determining the gas content (G) and are designed for a functionality capability across an overall operating temperature range of the fuel cells (3).

5. Method according to one of the preceding claims, **characterised in that** the membrane (14) is permeable for all three operating gases and that a value for a content (G) of all three operating gases is determined in the cooling liquid.

6. Device (10) for monitoring a fuel cell system (1), which can be operated with gaseous oxygen, hydrogen and nitrogen as operating gases, having a measuring cell (11) for receiving at least one subset of a cooling liquid of fuel cells (3) of the fuel cell system (1), **characterised in that** the measuring cell (11) comprises a first chamber (12) and a second chamber (13), which are separated from one another by means of a gas-permeable membrane (14), which is permeable for at least two of the three operating gases, wherein the first chamber (12) is embodied to receive the at least one subset of cooling liquid, and wherein the device (10) further comprises:
- a heat conductivity sensor (16) for measuring a thermal heat conductivity of a gas or gas mixture in the second chamber (13), preferably relative to a reference value,
- an analysis and evaluation device (40) which is designed to determine a value for a content of at least two of the operating gases in the cooling liquid as a function of the thermal heat conductivity of the gas or gas mixture in the second chamber (13), to compare the determined content of the at least two operating gases in the cooling liquid with a threshold value (S) and to trigger a safety reaction of the fuel cell system (1) when the determined content (G) of the at least two operating gases in the cooling liquid is greater than or equal to the threshold value (S).

7. Device (10) according to claim 6, **characterised in that** it comprises a flushing device (18) for flushing the second chamber (13) with a flushing gas, and that the analysis and evaluation device (40) is designed to trigger a flushing of the second chamber by means of the flushing device (18) at time intervals adjusted to a dynamic of the cooling liquid, and to determine in each case at least one value for the content of the at least two operating gases at these time intervals.

8. Device (10) according to claim 7, **characterised in that** the time intervals are constant and amount to between 15 and 45 seconds.

9. Device (10) according to one of claims 6 to 8, **characterised in that** it comprises a temperature sensor (15) for measuring a temperature of the cooling liquid in the first chamber (12) and that an analysis unit (41) is configured to determine a temperature-compensated measured value for the gas content as a function of this measured temperature, wherein the temperature sensor (15) and the analysis unit (41) are designed for a functional capability across an entire operating temperature range of the fuel cells (3).

10. Method according to one of the preceding claims, **characterised in that** the membrane (14) is permeable for all three operating gases, and that the analysis and evaluation device (40) is designed to determine a value for a content (G) of all three operating gases in the cooling liquid.

11. Device (10) according to one of claims 6 to 10, **characterised in that** the first chamber (12) has an inlet opening (12a) for a supply of cooling liquid into the first chamber (12) and an outlet opening (12b) for a discharge of cooling liquid out of the first chamber (12), wherein the inlet opening (12a) is connected to a line (23) for a supply of cooling liquid to the fuel cells (3) and the outlet opening (12b) is connected to a line (24) for a discharge of cooling liquid from the fuel cells (3).

12. Device (10) according to one of claims 6 to 10, **characterised in that** the first chamber (12) is integrated into a line (23) for a supply of cooling liquid to the fuel cells (3) or into a line (24) for a discharge of cooling liquid from the fuel cells (3).

## Revendications

1. Procédé de contrôle d'un système (1) de piles à combustible, qui fonctionne à l'oxygène gazeux, l'hydrogène et l'azote comme gaz de fonctionnement, dans lequel on envoie à une cellule (11) de mesure au moins une quantité partielle d'un liquide de refroidissement de piles (3) à combustible du système (1) de piles à combustible, **caractérisé en ce que** la cellule (11) de mesure comprend un premier espace (12) et un second espace (13), qui sont séparés l'un de l'autre par une membrane (14) perméable à au moins deux des trois gaz de fonctionnement, dans lequel on envoie a au moins une quantité partielle du liquide de refroidissement au premier espace (12) et dans lequel on mesure une conductivité thermique d'un gaz ou d'un mélange gazeux dans le deuxième espace (13), de préférence par rapport à une valeur de référence, et on en détermine une valeur d'une teneur (G) des au moins deux gaz de fonctionnement dans le liquide de refroidissement, et **en ce que** l'on déclenche une réaction de sécurité du système (1) de piles à combustible, si la teneur (G) déterminée des au moins deux gaz de fonctionnement du liquide de refroidissement est supérieure ou égale à une valeur (S) de seuil.

2. Procédé suivant la revendication 1, **caractérisé en ce que** l'on lave le second espace (13) dans des intervalles de temps adaptés à une dynamique du liquide de refroidissement et **en ce que**, dans ces intervalles de temps, l'on détermine respectivement au moins une valeur de la teneur (G) en les au moins deux gaz de fonctionnement.

3. Procédé suivant la revendication 2, **caractérisé en ce que** les intervalles de temps sont constants et compris entre 15 et 45 secondes.

4. Procédé suivant l'une des revendications précédentes, **caractérisé en ce que** l'on mesure une température du liquide de refroidissement dans le premier espace (12) et on en détermine une valeur de mesure compensée en température de la teneur (G) des au moins deux gaz de fonctionnement dans le liquide de refroidissement, dans lequel, à cet effet, on utilise une sonde (15) de température et une unité (41) d'analyse pour la détermination de la teneur (G) en gaz, qui sont conçues de manière à être aptes à fonctionner sur toute une plage de température de fonctionnement des piles (3) à combustible.

5. Procédé suivant l'une des revendications précédentes, **caractérisé en ce que** la membrane (14) est perméable aux trois gaz de fonctionnement et **en ce que** l'on détermine une valeur d'une teneur (G) des trois gaz de fonctionnement dans le liquide de refroidissement.

6. Installation (10) de contrôle d'un système (1) de pile à combustible, qui peut fonctionner avec de l'oxygène gazeux, de l'hydrogène et de l'azote comme gaz de fonctionnement, comprenant une cellule (11) de mesure de réception d'au moins une quantité partielle d'un liquide de refroidissement de piles (3) à combustible du système (1) de piles à combustible, **caractérisée en ce que** la cellule (11) de mesure comprend un premier espace (12) et un second espace (13), qui sont séparés l'un de l'autre par une membrane (14) perméable au gaz, qui est perméable pour au moins deux des trois gaz de fonctionnement, le premier espace (12) étant constitué pour recevoir la au moins une quantité partielle du liquide de refroidissement,
et l'installation (10) comprenant, en outre :
- un capteur (16) de conductivité thermique pour mesurer une conductivité thermique d'un gaz ou d'un mélange gazeux dans le second espace (13), de préférence par rapport à une valeur de référence,
- un dispositif (40) d'analyse et d'exploitation conçu pour déterminer une valeur d'une teneur en au moins deux des gaz de fonctionnement dans le liquide de refroidissement, en fonction de la conductivité thermique du gaz ou du mélange gazeux dans le second espace (13), pour comparer la teneur déterminée en les au moins deux gaz de fonctionnement dans le liquide de refroidissement à une valeur (S) de seuil et pour déclencher une réaction de sécurité du système (1) de piles à combustible, si la teneur (G) déterminée en les au moins deux gaz de fonctionnement du liquide de refroidissement est supérieure ou égale à la valeur (S) de seuil.

7. Installation (10) suivant la revendication 6, **caractérisée en ce qu'**elle comprend un dispositif (18) de lavage pour laver le second espace (13) par un gaz de lavage et **en ce que** le dispositif (40) d'analyse et d'exploitation est conçu pour déclencher, à des intervalles de temps adaptés à une dynamique du liquide de refroidissement, un lavage du second espace par le dispositif (18) de lavage et pour déterminer, dans ces intervalles de temps, respectivement, au moins une valeur de la teneur en les au moins deux gaz de fonctionnement.

8. Installation (10) suivant la revendication 7, **caractérisée en ce que** les intervalles de temps sont constants et compris entre 15 et 45 secondes.

9. Installation (10) suivant l'une des revendications 6 à 8, **caractérisée en ce qu'**elle comprend une sonde (15) de température pour mesurer une température du liquide de refroidissement dans le premier espace (12) et **en ce qu'**une unité (41) d'analyse est conçue pour déterminer, en fonction de cette température mesurée, une valeur de mesure compensée en température de la teneur en gaz, la sonde (15) de température et l'unité (41) d'analyse étant conçues pour être aptes à fonctionner sur toute une plage de température de fonctionnement des piles (3) à combustible.

10. Procédé suivant l'une des revendications précédentes, **caractérisé en ce que** la membrane (14) est perméable aux trois gaz de fonctionnement et **en ce que** le dispositif (40) d'analyse et d'exploitation est conçu pour déterminer une valeur d'une teneur (G) des trois gaz de fonctionnement dans le liquide de refroidissement.

11. Installation (10) suivant l'une des revendications 6 à 10, **caractérisée en ce que** le premier espace (12) a une ouverture (12a) d'entrée pour faire entrer du liquide de refroidissement dans le premier espace (12) et une ouverture (12b) de sortie pour faire sortir du liquide de refroidissement du premier espace (12), l'ouverture (12a) d'entrée communiquant avec un conduit (23) d'envoi de liquide de refroidissement aux piles (3) à combustible et l'ouverture (12b) de sortie avec un conduit (24) d'évacuation de liquide de refroidissement des piles (3) à combustible.

12. Installation (10) suivant l'une des revendications 6 à 10, **caractérisée en ce que** le premier espace (12) est intégré dans un conduit (23) pour un envoi de liquide de refroidissement aux piles (3) à combustible ou dans un conduit (24) pour une évacuation de liquide de refroidissement des piles (3) à combustible.
